# EUROPEAN PATENT SPECIFICATION

(11) **EP 3 111 724 B1**
(45) Date of publication and mention of the grant of the patent: **03.01.2018**
(21) Application number: 14709582.2
(22) Date of filing: 28.02.2014
(51) Int. Cl.: H05B 6/70

(54) **MICROWAVE OVEN HAVING A PHYSICALLY ADJUSTABLE WAVEGUIDE DYNAMICALLY DISPLACED BY A MOVEMENT CONTROL MEANS**
MIKROWELLENOFEN MIT PHYSIKALISCH EINSTELLBAREM WELLENLEITER MIT DYNAMISCHER VERSCHIEBUNG MITTELS EINER BEWEGUNGSTEUERUNGSVORRICHTUNG
FOUR À MICRO-ONDES COMPORTANT UN GUIDE D'ONDES POUVANT ÊTRE RÉGLÉ PHYSIQUEMENT ET QUI EST DÉPLACÉ DYNAMIQUEMENT PAR DES MOYENS DE COMMANDE DE MOUVEMENT

(43) Date of publication of application: 04.01.2017
(73) Proprietor: Arçelik Anonim Sirketi, 34950 Istanbul (TR)
(72) Inventor: AVCI, Sinem, 34950 Istanbul (TR); YIKILMAZCINAR, Sezgi, 34950 Istanbul (TR); ELMAS, Serdal, 34950 Istanbul (TR); SONMEZ, Necati, 34950 Istanbul (TR)
(86) International application number: PCT/EP2014/054006
(87) International publication number: WO 2015/127999

(56) References cited:
- US-A- 3 218 429
- US-A- 4 613 836
- US-A- 5 512 736

## Description

The present invention relates to a microwave oven having a waveguide whose structural properties are adjustable in order for matching the impedances of the microwave oven cavity together with various loads, to a microwave generating device.

A typical household microwave oven available in the market generates an electromagnetic field of microwaves at a frequency of 2,450 MHz (wavelength 12.24 cm). Microwaves are generated in a magnetron having metallic walls to be acting as a Faraday cage and which feeds via a waveguide, through which the waves of energy travel by reflecting from side to side into the oven cavity. Waveguides usually being in the form of metal tubes of rectangular cross section, accordingly carry the microwaves from the magnetron to the oven cavity while the waves reflect off metal walls.

The magnetron operating frequency and output power level is determined by the load impedance. The oven cavity geometry determines the distinct frequency of the oven cavity. Load conditions of a magnetron are dynamically affected by the shape and dielectric character of a food article to be heated. Parameters such as the food article and the utensil as well as their shape, composition, size and position in the oven cavity are all decisive.

It is to be noted that mismatching of impedances may potentially cause damage to the magnetron. When microwaves emitted from a magnetron are passed through a waveguide and transmitted into an oven cavity through an introduction port, a portion of microwaves travel in the opposite direction, i.e. towards the magnetron, which causes energy loss and overheats the magnetron.

It is known that, by modifying the structural properties of the waveguide, an equivalent impedance of cavity, waveguide and load is modified such that the impedances of the microwave oven cavity together with various loads can be matched to the magnetron.

Therefore, the present invention proposes a microwave oven having a structurally adjustable waveguide, by which maximum power transfer to the load is achievable, while at the same time minimizing power reflected back to the magnetron. Document US 3 218 429 Shows a microwave oven according to the prior art.

Among others, a prior art publication in the technical field of the invention may be referred to as KR20110057134, which discloses a microwave heating apparatus in which microwaves from oscillation parts are divided into a plurality of microwaves by power division parts and inputted to amplification parts and desired microwave powers from the amplification parts are supplied from feeding parts to a heating chamber. Reflected powers reflected from the heating chamber to the amplification parts via the feeding parts are detected by power detection parts. Each of the feeding parts has a plurality of antennas for supplying the microwaves having different characteristics to the heating chamber, and a control part extracts an oscillating frequency with which the reflected powers detected by the power detection parts are minimum, and causes the oscillation parts to oscillate at the extracted oscillating frequency so as to supply the microwaves having the different characteristics from the plurality of antennas to the heating chamber.

It is to be noted that while the system disclosed in the publication KR20110057134 undertakes optimization by varying the phase and frequency of the oscillator, the present invention ensures that maximum power transfer to the load is achieved by dynamically modifying the physical structure of the waveguide. It is to be noted that the solution proposed by the invention involves no components manufacturing costs of which are unnecessarily high and therefore provides a structurally simpler, cheaper and yet effective solution.

The present invention therefore provides a microwave oven having a waveguide whose structural properties are adjustable, as is provided by the characterizing features defined in Claim 1.

Primary object of the present invention is therefore to provide a microwave oven having a waveguide whose structural properties are adjustable in order for matching the impedances of the microwave cavity together with various loads to a microwave generating device.

The present invention proposes a microwave oven having a microwave transmission means for the transmission of microwaves of electric field and/or magnetic field produced by a microwave generating device into an oven cavity. The microwave transmission means has first and second lateral chambers separated by a middle chamber in communication therewith. A movable wall dynamically changes the volume of the middle chamber in response to different load situations such that equivalent impedance presented to microwave generating device is adjustable.

To this end, the movable wall is moved back and forth by a movement control means between a first and second safety blocks while the two lateral edges of the movable wall displace relative to the surfaces of the first and second safety blocks in a perpendicular manner with a substantially reduced clearance.

The movement control means has a rotatable main shaft moving the movable wall back and forth by means of a threaded connection. Said movement control means has a first and second support shafts inside respective support bushings that are connected to the movable wall at both sides of the main shaft for ensuring balanced advancement of the movable wall, relative to the first and second safety blocks.

The projected contact points of at least one shaft with the movable wall lie on a straight line that is in parallel with the base plane of the microwave transmission means. The movable wall displaces in a direction perpendicular to the axis through the first and second lateral chambers.

Accompanying drawings are given solely for the purpose of exemplifying a microwave oven having a waveguide whose structural properties are adjustable, whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

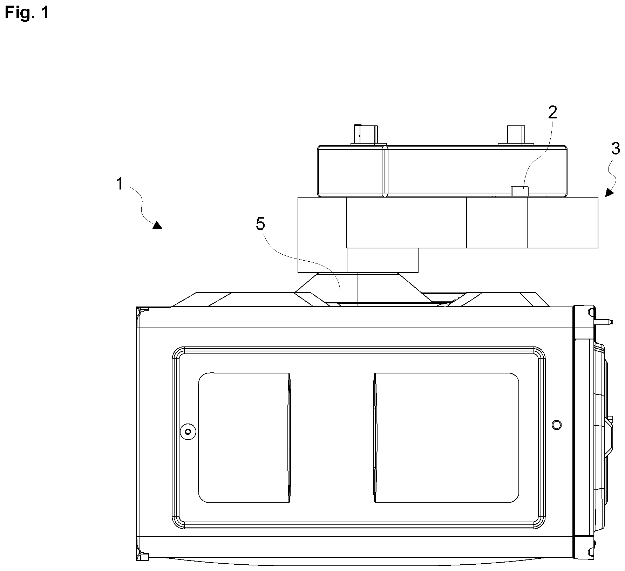

Fig. 1 demonstrates a general front view of the microwave oven with the oven cavity being shown according to the present invention.

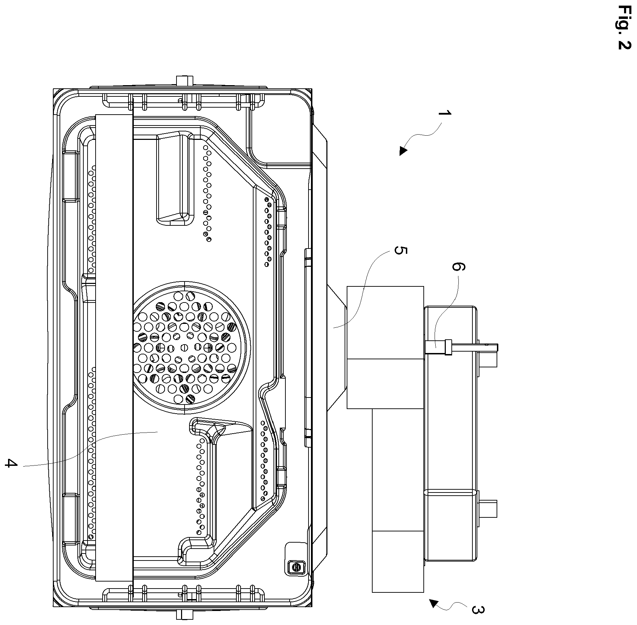

Fig. 2 demonstrates a general front view of the microwave oven according to the present invention.

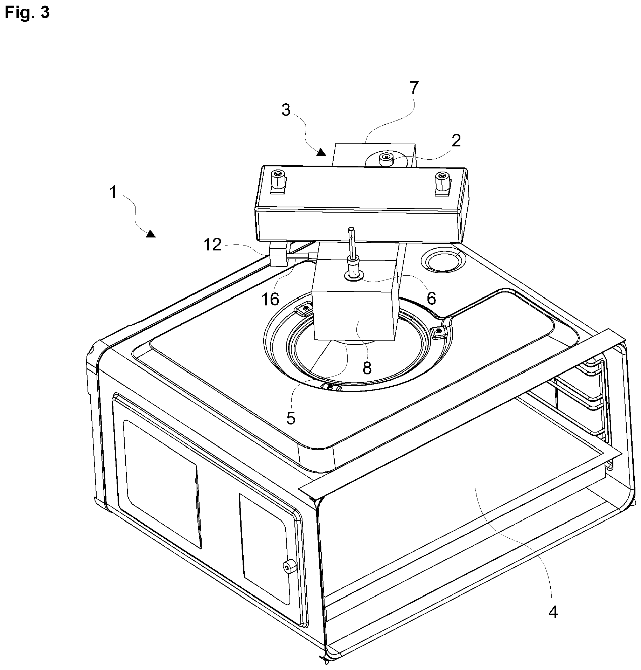

Fig. 3 demonstrates a general perspective view of the microwave oven according to the present invention.
Fig. 4 demonstrates a general top view of the microwave oven according to the present invention.

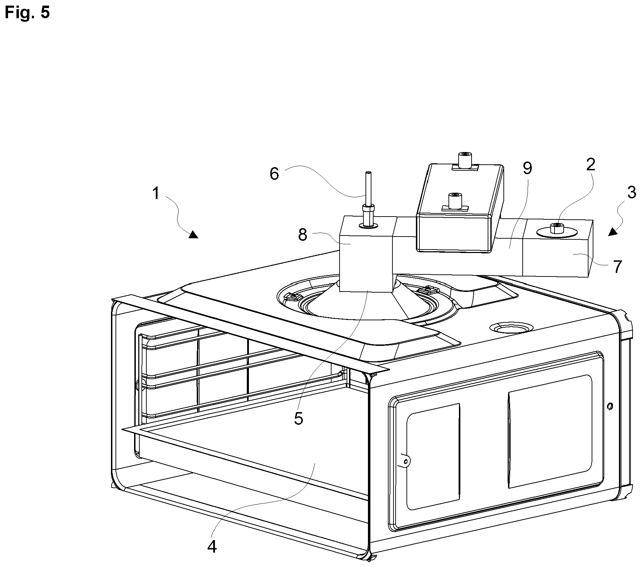

Fig. 5 demonstrates another general perspective view of the microwave oven according to the present invention.

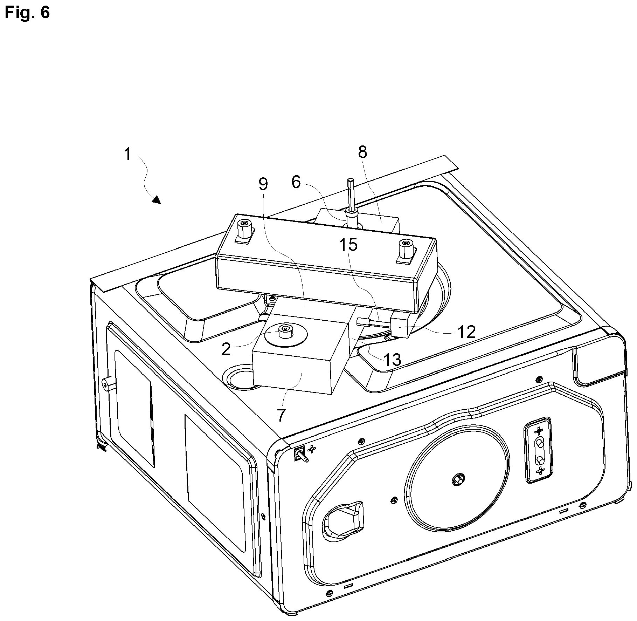

Fig. 6 demonstrates another general perspective view of the microwave oven according to the present invention.

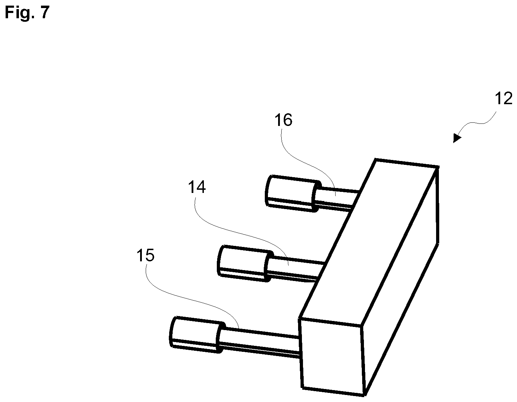

Fig. 7 demonstrates a general perspective view of the movement control means according to the present invention.

The following numerals are used in the detailed description:
1. Microwave oven
2. Microwave generating device
3. Microwave transmission means
4. Oven cavity
5. Microwave introduction port
6. Stirrer means
7. First lateral chamber
8. Second lateral chamber
9. Middle chamber
10. First safety block
11. Second safety block
12. Movement control means
13. Movable wall
14. Main shaft
15. First support shaft
16. Second support shaft

The present invention provides a microwave oven (1) having a microwave transmission means (3), which transmits electric field and/or magnetic field, made of an electrically conductive metallic material allowing for the transmission of microwaves and coupling a microwave generating device (2, shown as a connection end in the enclosed figures) to the oven cavity (4).

According to the present invention, the microwave oven (1) conventionally comprises a microwave generating device (2), i.e. a magnetron. The microwave oven (1) comprises a microwave transmission means (3), i.e. a waveguide, which confines and carries the microwaves produced by the microwave generating device (2) to be transmitted into the oven cavity (4) of the cooking chamber. The microwave transmission means (3) is connected to an antenna preferably associated with a stirrer means (6) in a transition zone between the microwave transmission means (3) and the oven cavity (4), said stirrer means (6) being actuatable to improve microwave energy distribution patterns.

As the wavelength and phase of the microwaves are modifiable by the transmission characteristics of the microwave transmission means (3), the food article in the oven cavity (4) as well as the microwave transmission means (3) structure will present an impedance to the microwave generating device (2), determining the operating point thereof. According to the present invention, the dimensions of the microwave transmission means (3) are modified such that the microwave generating device (2) operates in its maximum power region due to the fact that the equivalent impedance presented thereto in cases of various load situations is dynamically adjustable.

In accordance with the present invention, the dimensions of the microwave transmission means (3) are adjusted as explained hereinafter. Said microwave transmission means (3) coupled to the microwave generating device (2) has a first lateral chamber (7) being in communication with the microwave generating device (2) projecting through an opening in said first lateral chamber (7). The microwave transmission means (3) further has a second lateral chamber (8) being in communication with a microwave introduction port (5) through which the stirrer means (6) extends into the oven cavity (4).

The microwave transmission means (3) of the invention further comprises a middle chamber (9) in between the first and second lateral chambers (7, 8) in communication therewith. The dimensions of the middle chamber (9) are dynamically adjustable by means of a movement control means (12) such that a movable wall (13) of the middle chamber (9) displaces to reduce or enlarge the volume of the middle chamber (9) through which the microwaves travel between the first and second lateral chambers (7, 8).

The movement control means (12) is an electrical motor having a threaded main shaft (14) displacing said movable wall (13) in response to the rotation of the motor. Therefore, the dimensions of the middle chamber (9) disposed between the first and second lateral chambers (7, 8) can be dynamically changed so as to modify the transmission characteristics of the microwave transmission means (3).

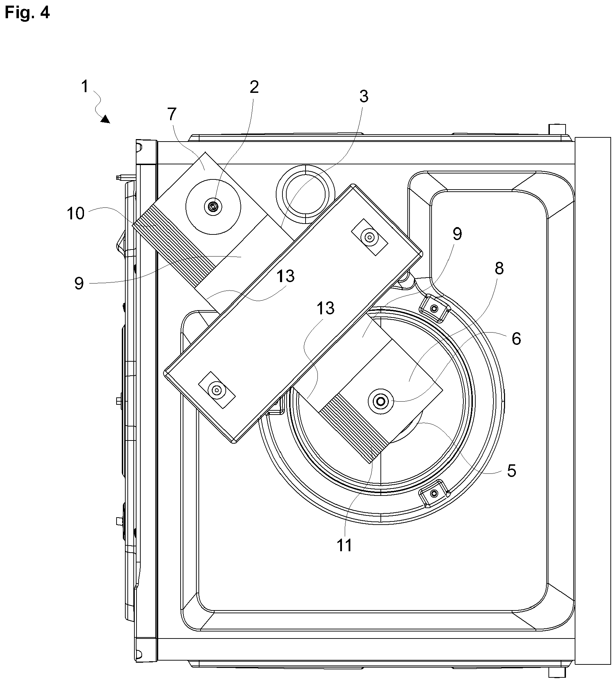

Further, a first and second support shafts (15, 16) are provided at both sides of the main shaft (14) and in equal distance thereto, ensuring uniform movement of the movable wall (13) relative to a first and second solid safety blocks (10, 11) as shown with parallel lines in Fig. 4. The movable wall (13) according to the invention, displacing such that its two lateral edges slide over the neighboring surfaces of the first and second safety blocks (10, 11) in a perpendicular manner, the first and second safety blocks (10, 11) provides that the transmission line through the microwave transmission means (3) remains closed and leakproof at the innermost and outermost positions of the movable wall (13). Further, as the triple connection structure between the movable wall (13) and the movement control means (12) ensures that each lateral edge of the movable wall (13) displaces in a substantially symmetrical manner relative to a respective first or second safety block (10, 11) surface, a constant opening of 0,1 mm can be ensured at both sides of the movable wall (13). The symmetrical movement advantageously enables use of a metallic sealing means around the edges of the movable wall (13) such that microwave leakage, which would affect the power transfer efficiency to the oven cavity, is further eliminated.

The projected contact points of the main shaft (14) as well as the first and second support shafts (15, 16) with the movable wall (13) lie on a straight line that is in parallel with the base plane of the microwave transmission means (3).

In accordance with the present invention, the dimension of the middle chamber (9) in a direction perpendicular to the transmission axis between the first and second lateral chambers (7, 8), as dynamically modified by the movable wall (13), is determined to be variable between a range of 80 - 100 mm and 110 - 130 mm preferably 87 and 117 mm. As the maximum distance the movable wall (13) is moved is 30mm, the length the two lateral edges of the same slide over the neighboring surfaces of the first and second safety blocks (10, 11) in the moving direction should be at least 30 mm and preferably 35 mm.

In order for insulating the movement control means (12), the main shaft (14) as well as the first and second support shafts (15, 16) of the movement control means (12) are made of ceramic material. Alternatively, polypropylene or all of ametals can also be employed.

The main shaft (14) according to the present invention is a threaded shaft meshing with a respective bushing part in connection with the movable wall (13) such that the movable wall (13) is moved back and forth with the rotation of the main shaft (14) of the movement control means (12). The first and second support shafts (15, 16) inside respective support bushings serves to the purpose of ensuring symmetrically uniform displacement of the movable wall (13) relative to the first and second safety blocks (15, 16).

Further, in accordance with the present invention, it is established that the characteristics of phase and/or magnitude and/or impedance analogy/digitally between the transmitted and reflected waves can be adjusted in an improved manner due to the fact that the movable wall (13) displaces back and forth perpendicular to the main longitudinal axis through the microwave transmission means (3).

According to the present invention, the position adjustment of the movable wall (13) can be accomplished by a microcontroller driving the movement control means (12) based on predetermined settings in response the specific food item selection of the user. Alternatively, the forward and reflected power flow of microwave energy can conventionally be measured by a coupler and detector assembly, which is known to the skilled worker in the art. In both cases, the movement control means (12) in accordance with the invention can be driven so as to modify the transmission characteristics of the microwave transmission means (3) by which maximum power transfer to the load is achievable, while at the same time minimizing power reflected back to the magnetron.

In a nutshell, the present invention proposes a microwave oven (1) having a microwave transmission means (3) of an electrically conductive material allowing for the transmission of microwaves and which confines and carries the microwaves produced by a microwave generating device (2) to be transmitted into an oven cavity (4) adapted to contain food articles to be cooked.

The microwave transmission means (3) has a first lateral chamber (7) being in communication with the microwave generating device (2), a second lateral chamber (8) being in communication with a microwave introduction port (5) and a middle chamber (9) in between the first and second lateral chambers (7, 8) in communication therewith such that a movable wall (13) of the middle chamber (9) displaces to reduce or enlarge the volume of the middle chamber (9) through which the microwaves travel between the first and second lateral chambers (7, 8).

In a further embodiment of the invention, the movable wall (13) is displaced by a movement control means (12) between a first and second safety blocks (10, 11) such that two lateral edges of the movable wall (13) moves relative to the surfaces of the first and second safety blocks (10, 11) in a substantially perpendicular manner.

In a still further embodiment, the movement control means (12) has a main shaft (14) adapted to displace the movable wall (13) back and forth in response to the rotation of the movement control means (12) by means of a threaded portion to mesh with a respective bushing part in connection with the movable wall (13).

In a yet still further embodiment, the movement control means (12) has a first and second support shafts (15, 16) provided at both sides of the main shaft (14) in equal distance thereto, both ensuring uniform movement of the movable wall (13) relative to the first and second safety blocks (10, 11), by means of support bushings in connection with the movable wall (13).On the other hand, only one shaft could be used to uniform movement. And also, non uniform movement could be preferred for matching load.

In a yet still further embodiment, the projected contact points of the main shaft (14) and the first and second support shafts (15, 16) with the movable wall (13) lie on a straight line that is in parallel with the base plane of the microwave transmission means (3).

In a yet still further embodiment, the main shaft (14) and the first and second support shafts (15, 16) are made of ceramic material. Alternatively all of ametals could be used.

In a yet still further embodiment, the movable wall (13) displaces back and forth in a direction perpendicular to at least an axis, for example perpendicular to the main longitudinal axis through the microwave transmission, means (3) of electric field or magnetic field. On the other hand, one or more axis movement could be used.

The present invention therefore affords a microwave oven (1) having a structurally adjustable waveguide, whose physical structure can be adjusted in a simple and cost-effective arrangement compared to substantially complex alternative solutions.

## Claims

1. A microwave oven (1) having a microwave transmission means (3) of an electrically conductive material allowing for the transmission of microwaves of electric field and/or magnetic field and which confines and carries the microwaves produced by a microwave generating device (2) to be transmitted into an oven cavity (4) adapted to contain food articles to be cooked,
**characterized in that**
said microwave transmission means (3) has a first lateral chamber (7) being in communication with the microwave generating device (2), a second lateral chamber (8) being in communication with a microwave introduction port (5) and a middle chamber (9) in between the first and second lateral chambers (7, 8) in communication therewith such that a movable wall (13) of said middle chamber (9) displaces to reduce or enlarge the volume of the middle chamber (9) through which the microwaves travel between the first and second lateral chambers (7, 8).

2. A microwave oven (1) as in Claim 1 **characterized in that** said movable wall (13) is displaced by a movement control means (12) between a first and second safety blocks (10, 11) such that two lateral edges of the movable wall (13) moves relative to surfaces of said first and second safety blocks (10, 11) in a substantially perpendicular manner.

3. A microwave oven (1) as in Claim 1, **characterized in that** said movement control means (12) has a main shaft (14) adapted to displace the movable wall (13) back and forth in response to the rotation of the movement control means (12) by means of a threaded portion to mesh with a respective bushing part in connection with the movable wall (13).

4. A microwave oven (1) as in Claim 3, **characterized in that** the movement control means (12) has at least a first and optionally second support shafts (15, 16) provided at both sides of the main shaft (14) in equal distance thereto, both ensuring uniform or nonuniform movement of the movable wall (13) relative to the first and second safety blocks (10, 11), by means of support bushings in connection with the movable wall (13).

5. A microwave oven (1) as in Claim 4, **characterized in that** projected contact points of the main shaft (14) and the first and second support shafts (15, 16) with the movable wall (13) lie on a straight line that is in parallel with the base plane of the microwave transmission means (3).

6. A microwave oven (1) as in Claim 4 or 5, **characterized in that** the main shaft (14) and the first and second support shafts (15, 16) are made of ceramic material.

7. A microwave oven (1) as in Claim 4 or 5, **characterized in that** the main shaft (14) and the first and second support shafts (15, 16) are made of polypropylene.

8. A microwave oven (1) as in any previous Claims, **characterized in that** the movable wall (13) displaces back and forth in a direction perpendicular to at least an axis through the microwave transmission means (3).

## Patentansprüche

1. Ein Mikrowellenofen (1) mit einem Mikrowellenübertragungsmittel (3) eines elektrisch leitfähigen Materials, das erlaubt für die Übertragung der Mikrowellen des elektrischen Feldes und/oder magnetischen Feldes und begrenzt und trägt die Mikrowellen, die von einem Mikrowellenproduktionsgerät (2) produziert werden für die Übertragung in einen Ofenhohlraum (4) angepasst für Behalten von Nahrungsmitteln, die gekocht werden, **dadurch gekennzeichnet, daß** besagte Mikrowellenübertragungsmittel (3) besitzt eine erste laterale Kammer (7), die mit Mikrowellenproduktionsgerät (2) in Kontakt ist, eine zweite laterale Kammer (8), die mit Mikrowelleneinführungsanschluss (5) in Kontakt ist und eine mittlere Kammer (9) zwischen den ersten und zweiten Kammern (7, 8), die mit diesen in Kontakt ist, sodaß eine transportierbare Wand (13) der besagten Kammer (9) verschiebt wird, um das Volumen der mittleren Kammer (9) zu reduzieren oder zu erhöhen, wodurch die Mikrowellen zwischen den ersten und zweiten lateralen Kammern (7, 8) hindurchgehen.

2. Ein Mikrowellenofen (1) nach Anspruch 1, **dadurch gekennzeichnet, daß** besagte transportierbare Wand (13) verschoben ist mit einer Bewegungskontrollmittel (12) zwischen einem ersten und zweiten Sicherheitsblöcken (10, 11), sodaß zwei laterale Kanten der transportierbaren Wand (13) sich bewegt relativ zu Oberflächen der besagten ersten und zweiten Sicherheitsblöcken (10, 11) in einer wesentlich senkrechten Art und Weise.

3. Ein Mikrowellenofen (1) nach Anspruch 1, **dadurch gekennzeichnet, daß** besagte Bewegungskontrollmittel (12) eine Hauptantriebswelle (14) hat, die geeignet ist, die transportierbare Wand (13) hin und her auf die Rotation der Bewegungskontrollmittel (12) hin zu verschieben mittels einer Gewindeportion, um mit einem entsprechenden Hülsenteil in Verbindung mit der transportierbaren Wand (13) zu verzahnen.

4. Ein Mikrowellenofen (1) nach Anspruch 3, **dadurch gekennzeichnet, daß** Bewegungskontrollmittel (12) mindestens eine erste und optional zweite Unterstützungswellen (15, 16) besitzt, die an beiden Seiten der Hauptantriebswelle (14) versorgt sind in gleicher Entfernung hierzu, beide stellen sicher gleichförmige oder ungleichförmige Bewegung der transportierbaren Wand (13) relativ zur ersten und zweiten Sicherheitsblöcken (10, 11), mittels Unterstützungshülsen in Verbindung mit transportierbaren Wand (13).

5. Ein Mikrowellenofen (1) nach Anspruch 4, **dadurch gekennzeichnet, daß** projizierte Berührungspunkte der Hauptantriebswelle (14) und der ersten und zweiten Unterstützungs-wellen (15, 16) mit transportierbarer Wand (13) liegen auf einer geradlinigen Linie, die parallel mit der Grundebene der Mikrowellenübertragungsmittel (3) ist.

6. Ein Mikrowellenofen (1) nach Ansprüche 4 oder 5, **dadurch gekennzeichnet, daß** die Hauptantriebswelle (14) und die erste und zweite Unterstützungswellen (15, 16) aus keramischem Werkstoff ausgebaut sind.

7. Ein Mikrowellenofen (1) nach Ansprüche 4 oder 5, **dadurch gekennzeichnet, daß** die Hauptantriebswelle (14) und die erste und zweite Unterstützungswellen (15, 16) aus Polypropylen ausgebaut sind.

8. Ein Mikrowellenofen (1) nach den vorhergehenden Ansprüche, **dadurch gekennzeichnet, daß** transportierbare Wand (13) sich hin und her verschiebt in einer Richtung senkrecht zur mindestens einer Achse durch die Mikrowellenübertragungsmittel (3).

## Revendications

1. Four à micro-ondes (1) comportant un moyen de transmission hyperfréquence (3) d'un matériau électriquement conducteur permettant la transmission de micro-ondes de champ électrique et / ou de champ magnétique et confinant et portant les micro-ondes produites par un dispositif générateur de micro-ondes (2) à transmettre dans une cavité de four (4) apte à contenir des produits alimentaires à cuire, **caractérisé en ce que**
ledit moyen de transmission hyperfréquence (3) comporte une première chambre latérale (7) en communication avec le dispositif générateur de micro-ondes (2), une seconde chambre latérale (8) étant en communication avec un orifice d'introduction micro-ondes (5) et une chambre intermédiaire (9) entre les première et seconde chambres latérales (7, 8) en communication avec celles-ci de telle sorte qu'une paroi mobile (13) de ladite chambre médiane (9) se déplace pour réduire ou agrandir le volume de la chambre intermédiaire (9) les micro-ondes se déplacent entre les première et seconde chambres latérales (7, 8).

2. Four à micro-ondes (1) selon la revendication 1, **caractérisé en ce que** ladite paroi mobile (13) est déplacée par des moyens de commande de mouvement (12) entre des premier et second blocs de sécurité (10, 11) tels que deux bords latéraux de la paroi mobile (13) se déplace par rapport aux surfaces desdits premier et second blocs de sécurité (10, 11) d'une manière sensiblement perpendiculaire.

3. Four à micro-ondes (1) selon la revendication 1, **caractérisé en ce que** lesdits moyens de commande de mouvement (12) comportent un arbre principal (14) adapté pour déplacer la paroi mobile (13) en arrière en réponse à la rotation des moyens de commande de mouvement (12) au moyen d'une partie filetée pour engrener avec un élément douille respective en liaison avec la paroi mobile (13).

4. Four à micro-ondes (1) selon la revendication 3, **caractérisé en ce que** les moyens de commande de mouvement (12) ayant au moins un premier et éventuellement un second arbre de support (15, 16) disposés de part et d'autre de l'arbre principal (14) à cet effet, tous deux assurant un mouvement uniforme ou non uniforme de la paroi mobile (13) par rapport aux premier et deuxième blocs de sécurité (10, 11), au moyen de la douille d'appui en liaison avec la paroi mobile (13).

5. Four à micro-ondes (1) selon la revendication 4, **caractérisé en ce que** les points de contact projetés de l'arbre principal (14) et des premier et second arbres de support (15, 16) avec la paroi mobile (13) se trouvent sur une ligne droite en parallèle avec le plan de base des moyens de transmission hyperfréquence (3).

6. Four à micro-ondes (1) selon la revendication 4 ou 5, **caractérisé en ce que** l'arbre principal (14) et les premier et second arbres de support (15, 16) sont en céramique.

7. Four à micro-ondes (1) selon la revendication 4 ou 5, **caractérisé en ce que** l'arbre principal (14) et les premier et second arbres de support (15, 16) sont en polypropylène.

8. Four à micro-ondes (1) selon l'une quelconque des revendications précédentes, **caractérisé en ce que** la paroi mobile (13) se déplace d'avant en arrière dans une direction perpendiculaire à au moins un axe à travers les moyens de transmission hyperfréquence (3).
